# EUROPÄISCHE PATENTSCHRIFT

(11) **EP 1 940 179 B1**
(45) Veröffentlichungstag und Bekanntmachung des Hinweises auf die Patenterteilung: **28.08.2013**
(21) Anmeldenummer: 07012847.5
(22) Anmeldetag: 29.06.2007
(51) Int. Cl.: H04N 7/50, H04N 7/26

(54) **Verfahren und Kodiervorrichtung zum Generieren eines kodierten Datenstroms sowie Extraktionsverfahren und Extraktionsvorrichtung zum Extrahieren zumindest eines Datenobjekts aus einem kodierten Datenstrom**
Method and encoding device for generating an encoded data stream and extraction method and extraction device for extracting at least one data object from an encoded data stream
Procédé et dispositif de codage destinés à générer un flux de données codé tout comme procédé et dispositif d'extraction destinés à extraire au moins un objet de donnée d'un flux de données codé

(30) Priorität: 17.10.2006 EP 06021775
(43) Veröffentlichungstag der Anmeldung: 02.07.2008
(73) Patentinhaber: Siemens Aktiengesellschaft, 80333 München (DE)
(72) Erfinder: Bäse, Gero, 81371 München (DE); Ghandour, Roy, 75014 Paris (FR)

(56) Entgegenhaltungen:
- US-A1- 2003 072 372
- US-A1- 2007 110 154
- LEE M H ET AL: "ROI slice SEI message", 19. JVT MEETING; 31-03-2006 - 07-04-2006; GENEVA, CH; (JOINT VIDEOTEAM OF ISO/IEC JTC1/SC29/WG11 AND ITU-T SG.16 ),, Nr. JVT-S054, 3. April 2006 (2006-04-03), XP030006433, ISSN: 0000-0409
- WEDI T ET AL: "4:4:4 Intra-only coding", 16. JVT MEETING; 73. MPEG MEETING; 24-07-2005 - 29-07-2005; POZNAN,PL; (JOINT VIDEO TEAM OF ISO/IEC JTC1/SC29/WG11 AND ITU-T SG.16 ),, no. JVT-P088, 21 July 2005 (2005-07-21), XP030006125, ISSN: 0000-0416
- WENGER: "Flexible Macroblock Ordering (FMO) 101", 4. JVT MEETING; 61. MPEG MEETING; 22-07-2002 - 26-07-2002; KLAGENFURT,AT; (JOINT VIDEO TEAM OF ISO/IEC JTC1/SC29/WG11 AND ITU-T SG.16 ),, no. JVT-D063, 26 July 2002 (2002-07-26), XP030005337, ISSN: 0000-0441
- STOCKHAMMER: "Independent Data Partitions A and B", 3. JVT MEETING; 60. MPEG MEETING; 06-05-2002 - 10-05-2002; FAIRFAX,US; (JOINT VIDEO TEAM OF ISO/IEC JTC1/SC29/WG11 AND ITU-T SG.16 ),, no. JVT-C132, 10 May 2002 (2002-05-10), XP030005245, ISSN: 0000-0442
- MISKA M HANNUKSELA ET AL: "Picture and Slice Header Structure", 14. VCEG MEETING; 24-09-2001 - 27-09-2001; SANTA BARBARA, CALIFORNIA,US; (VIDEO CODING EXPERTS GROUP OF ITU-T SG.16),, no. VCEG-N59, 20 September 2001 (2001-09-20), XP030003309, ISSN: 0000-0460
- H264, XP040418363,

## Beschreibung

Die Erfindung betrifft ein Verfahren und eine Kodiervorrichtung zum Generieren eines kodierten Datenstroms sowie ein Extraktionsverfahren und eine Extraktionsvorrichtung zum Extrahieren zumindest eines Datenobjekts aus einem kodierten Datenstrom.

Technologien zur Speicherung und Übertragung von multimedialen Inhalten haben zu neuen und schnell wachsenden Applikationen in den Anwendungsfeldern Telemedizin und Überwachung geführt. Bei Verwendung von breitbandigen drahtgebundenen Netzwerken können komplexe Informationen dieser Anwendungen in einer sehr guten Qualität wiedergegeben werden, wie beispielsweise medizinische Bilder und Videos in Echtzeit. Es gibt eine Vielzahl von standardisierten Verfahren für Videokonferenzapplikationen, wie beispielsweise die ITU-Standards (ITU - International Telecommunications Union) H.320 für ISDN (ISDN - Integrated Services Digital Network), H.323 für LAN (LAN - Local Area Network) und H.324 für POTS (POTS - Plane Old Telephone System). Diese werde für unterschiedliche drahtgebundene Netzwerke eingesetzt. Es zeigt sich jedoch, dass drahtlose Endgeräte auf diesen drahtgebundenen Netzwerken unter Verwendung zugehöriger Standards schlecht arbeiten.

Ein Benutzer eines Überwachungsvideos ist bspw. oftmals nicht an einem Geschehen in einem gesamten Videobild interessiert. Nur ein oder mehrere Bilddatenobjekte (im Englischen: "Regions of Interest" oder "Regions of Relevance") sind dabei von Interesse, beispielsweise diejenigen Bilddatenobjekte, die eine bestimmte Handlung wiedergeben, wie z.B. das Öffnen einer Tür, eine Person, die in eine Szene tritt oder ein Auto, welches sich auf einer Straße bewegt. Bei einer Telemedizinanwendung ist der Spezialist zumeist nur an dem Bilddatenobjekt, wie beispielsweise ein bestimmtes Organ des Patienten, interessiert, für das der Spezialist eine Diagnose erstellen soll. Auf der einen Seite soll eine Bildqualität eines kodierten Datenstroms, der übertragen werden soll, möglichst hoch sein. Auf der anderen Seite sind gerade bei Verwendung von mobilen Endgeräten die zur Verfügung stehenden Bandbreiten beschränkt. Somit muss eine sinnvolle Abstimmung zwischen Bandbreite und Qualität des übertragenen Datenstroms berücksichtigt werden.

Es ist nachteilig, dass auf Datenobjekte wie Bilddatenobjekte in einem kodierten Bilddatenstrom derart zugegriffen werden muss, dass zunächst der gesamte kodierte Bilddatenstrom dekodiert wird, um dann Zugriff auf das kodierte Bilddatenobjekt in unkodierter Form zu erlangen. Soll anschließend das gewonnene Bilddatenobjekt wieder kodiert werden, so ergibt sich als weiterer Nachteil, dass durch das erneute Kodieren des Bilddatenobjekts eine Bildqualität weiter verschlechtert wird.

Eine Möglichkeit zum Adressieren von Bilddatenobjekten in einem kodierten Bilddatenstrom bietet ein Standard H.264/AVC. Hierbei können Bilddatenobjekte, auch als Region of Interest bezeichnet, mit Hilfe eines Kodiermodus "Flexible Macroblock Ordering (FMO)", wie in dem Main Profile des H.264-Standard beschrieben wird, kodiert werden. Hierbei wird eine Anordnung von Makroblöcken in einem oder mehreren Bildern umsortiert. Eine Gruppe von Makroblöcken wird dann einem Slice zugeordnet, der unabhängig von anderen Bilddatenteilen als dem Slice kodiert beziehungsweise dekodiert werden kann. In der Druckschrift Wenger: "Flexible Macroblock Ordering (FMO) 101", 4. JVT Meeting, 61. MPEG Meeting, 22. Juli 2002 bis 26. Juli 2002, Klagenfurt, AT, (Joint Video Team of ISO/IEC JTC1/SC29/WG11 and ITU-T SG.16), Nr. JVT-D063, 26. Juli 2002, findet sich eine Beschreibung des FMO-Kodiermodus.

Das FMO-Verfahren hat jedoch den Nachteil, dass durch die Kodiervorschrift der zu kodierende Slice = Bilddatenobjekt unabhängig von anderen Makroblöcken zu kodieren ist, wodurch sich eine reduzierte Kompressionseigenschaft ergibt. Dies ist dadurch zu erklären, dass der Standard H.264 durch eine Reihe von möglichen Prädiktionsmodi versucht, einen großen Teil der signalenergie eines zu kodierenden Bildes durch Prädiktion kodiereffizient zu kodieren. Jedoch können eine Reihe von Prädiktionsmodi bei FMO nicht verwendet werden, so dass eine schlechte Kompression erzielt wird.

In der Druckschrift US 2003/072372 A1 wird ein Video-Navigationssystem für mehrere Nutzer beschrieben, bei dem Randblöcke eines Videoausschnitts, die Prädiktions-Abhängigkeiten zu Bilddaten außerhalb des Videoausschnitts aufweisen, unabhängig von diesen Bilddaten in einem Intra-Modus kodiert werden.

In dem Dokument US 2007/110154 A1 wird ein Videokodierverfahren beschrieben, bei dem eine zeitliche Prädiktion von Bildblöcken immer nur Informationen aus einer vorbestimmten Bildregion verwendet.

In der Druckschrift T. Wedi et al.: "4:4:4 Intra-only coding", 16. JVT Meeting, 73. MPEG Meeting, 24. Juli 2005 bis 29. Juli 2005, Poznan, PL, (Joint Video Team of ISO/IEC JTC1/SC29/WG11 and ITU-T SG.16), Nr. JVT-P088, 21. Juli 2005, wird eine Videokodierung beschrieben, bei der die einzelnen Farbkomponenten eines Makroblocks unabhängig voneinander kodiert und dekodiert werden können. Dabei wird jede Farbkomponente mit einer separaten Information verknüpft.

Die Druckschrift Stockhammer: "Independent Data Partitions A and B", 3. JVT Meeting, 60. MPEG Meeting, 6. Mai 2002 bis 10. Mai 2002, Fairfax, US, (Joint Video Team of ISO/IEC JTC1/SC29/WG11 and ITU-T SG.16), Nr. JVT-C132, 10. Mai 2002, offenbart die Aufteilung von Videodaten in Partitionen, welche unabhängig voneinander dekodiert werden können.

In dem Dokument Miska M. Hannuksela et al.: "Picture and Slice Header Structure", 14. VCEG Meeting, 24. September 2001 bis 27. September 2001, Santa Barbara, Kalifornien, US, (Video Coding Experts Group of ITU-T SG.16), Nr. VCEG-N59, 20. September 2001, wird die Datenstruktur eines Headers von Slices in Videodaten beschrieben, welche eine unabhängige Dekodierung der Slices ermöglicht.

Die Druckschrift Miska M Hannuksela et al.: "On Random Access", Joint Video Team (JVT) of ISO/IEC MPEG & ITU-T VCEG (ISO/IEC JTC1/SC29/WG11 and ITU-T SG16 Q.6) 4th Meeting: Klagenfurt, Austria, 22. bis 26. Juli 2002, Dokument: JVT_D097, beschreibt die Signalisierung von kodierten Bildern in einem Videodatenstrom, auf welche im Rahmen der Dekodierung zufällig zugegriffen werden kann.

Die Aufgabe der vorliegenden Erfindung besteht darin, Verfahren und vorrichtungen anzugeben, die es ermöglichen, Datenobjekte, wie beispielsweise Bilddatenobjekte, derart zu kodieren, dass diese zum einen in einem kodierten Datenstrom mit einer hohen Kompressionsrate komprimiert, als auch in einfacher Art und Weise aus einem kodierten Datenstrom extrahiert werden können.

Diese Aufgabe wird durch die unabhängigen Ansprüche gelöst. Weiterbildungen der Erfindung sind den abhängigen Ansprüchen zu entnehmen.

Die Erfindung betrifft ein Verfahren zum Generieren eines kodierten Datenstroms aus einem Datenstrom, wobei ein Teil des Datenstroms ein Datenobjekt repräsentiert,
mit folgenden Schritten:
- Kodieren des Datenstroms in den kodierten Datenstrom gemäß einem Kodierstandard, wobei der kodierte Datenstrom in ein das Datenobjekt kodiertes Datenobjekt und weitere kodierte Daten einteilbar ist;
- Bereitstellen einer Zusatzinformation, wobei die Zusatzinformation diejenige Information aufweist, die zusätzlich zu dem kodierten Datenobjekt benötigt wird, um das kodierte Datenobjekt unabhängig von den weiteren kodierten Daten zu dekodieren;
- Hinzufügen der Zusatzinformation zu dem kodierten Datenstrom.

Erfindungsgemäß repräsentiert der Datenstrom ein Bild oder eine Videosequenz. Hierbei werden bei der Kodierung des Datenobjekts eine gemäß dem Kodierstandard vorgegebene Prädiktion auf Basis erster und zweiter Referenzbilddaten verwendet, wobei die ersten Referenzbilddaten lediglich durch zumindest einen Teil der weiteren kodierten Daten repräsentiert werden, und die Zusatzinformation durch die ersten Referenzbilddaten gebildet wird. Das Verfahren erzielt eine hohe Flexibilität zur Extrahieren des kodierten Datenobjekts bei gleichzeitig hoher Kompressionsrate.

Die Verwendung der Zusatzinformation zeigt den vorteil, dass zum Dekodieren des kodierten Datenobjekts nur das kodierte Datenobjekt selbst und die Zusatzinformation benötigt werden, wodurch ein langwieriges Dekodieren weiterer Teile des kodierten Datenstroms vermieden wird.

Ferner kann vorzugsweise die Zusatzinformation in Form eines Datencontainers dem kodierten Datenstrom hinzugefügt werden, wobei der Datencontainer derart als optional zu dekodierendes Syntaxelement erzeugt wird, dass dieser eine gemäß dem Kodierstandard konforme Syntax aufweist. Insbesondere, wenn als Kodierstandard der H.264 Standard eingesetzt wird, wird das Syntaxelement des Datencontainers durch ein SEI-Datenblock des H.264 Standards ausgebildet.

Dies zeigt den vorteil, dass ein Empfänger des kodierten Datenstroms, der die Zusatzinformation nicht auswerten kann, das Syntaxelement Datencontainer ignoriert, bspw. durch Überspringen im kodierten Datenstrom. Ein anderer Empfänger, z.B. eine Extraktionsvorrichtung hingegen liest die Zusatzinformation aus dem Datencontainer aus und kann diese verarbeiten.

Ferner können die ersten Referenzbilddaten zu einem Bildblock zusammengefasst, der Bildblock gemäß dem Kodierstandard in einen kodierten Bildblock kodiert und die ersten Referenzbilddaten in der Zusatzinformation durch den kodierten Bildblock repräsentiert werden. Diese Erweiterung zeichnet sich dadurch aus, dass die Zusatzinformation in sehr einfacher Weise aus den Bilddaten der für die Prädiktion der zu dem zu kodierenden Datenobjekt benachbarten Pixelwerten gewonnen werden kann.

In einer Ergänzung hierzu wird vorzugsweise der Bildblock gemäß einer Transformation und einer Quantisierung des Kodierstandard in einen kodierten Bilddatenblock kodiert. Hierdurch wird eine Darstellungsform der Zusatzdaten bzw. des Datencontainers erreicht, die ein geringes Speichervolumen benötigt.

Werden in einer optionalen Erweiterung des Verfahrens als Kodierstandard der ITU H.264 Videokodierstandard eingesetzt und als erste Referenzbilddaten Bilddaten verwendet, die im Rahmen einer Intra Prädiktion des Datenobjekts gemäß H.264 von den zu dem Datenobjekt benachbarten Makroblöcken benötigt, so kann das vorgeschlagene Verfahren auch auf Bilddaten, die mittels einer Intra Prädiktion des H.264 kodiert werden, angewendet werden.

Die Erfindung betrifft ferner eine Kodiervorrichtung zum Generieren eines kodierten Datenstroms, wobei die Kodiervorrichtung ein Mittel aufweist, wobei das Mittel zum Durchführen eines oder mehrerer Schritte des Verfahrens zum Generieren des kodierten Datenstroms aus dem Datenstrom ausgestaltet ist. Hiermit ist das Verfahren zum Generieren des kodierten Datenstroms implementier- und ausführbar.

Ein weiterer Bestandteil der vorliegenden Erfindung ist ein Extraktionsverfahren zum Extrahieren zumindest eines kodierten Datenobjekts aus einem kodierten Datenstrom, wobei der kodierte Datenstrom einem oder mehrerer Schritte des Verfahrens zum Generieren des kodierten Datenstroms kodiert worden ist,
mit folgenden Schritten:
- Auslesen des kodierten Datenobjekts aus dem kodierten Datenstrom;
- Auslesen eines den kodierten Datenstrom umfassenden Datencontainers und einer Zusatzinformation aus dem Datencontainer;
- Erzeugen eines Datenobjekts durch Dekodieren des kodierten Datenobjekts und der Zusatzinformation.

Hierbei ist von Vorteil, dass diese direkt aus dem kodierten Bilddatenstrom entnommen werden können, ohne dass eine aufwändige Dekodierung der kodierten Bilddaten erforderlich ist.

Schließlich ist Teil der Erfindung eine Extraktionsvorrichtung zum Extrahieren zumindest eines kodierten Datenobjekts aus einem kodierten Datenstrom, wobei der kodierte Datenstrom einem oder mehrerer Schritte des Verfahrens zum Generieren des kodierten Datenstroms kodiert worden ist,
mit einem Extraktionsmittel zum Auslesen des kodierten Datenobjekts aus dem kodierten Datenstrom eines den kodierten Datenstrom umfassenden Datencontainers und einer Zusatzinformation aus dem Datencontainer, und mit einem Dekodiermittel zum Erzeugen eines Datenobjekts durch Dekodieren des kodierten Datenobjekts und der Zusatzinformation. Hiermit ist Extraktionsverfahren zum Extrahieren zumindest eines kodierten Datenobjekts aus einem kodierten Datenstrom implementier- und ausführbar.

Die Erfindung und ihre Weiterbildungen werden anhand von Zeichnungen näher erläutert. Es zeigen
- Figur 1: in schematischer Anordnung Makroblöcke des H.264-Standards, die zur Intra-Prädiktion eines Bildpunkts verwendet werden;
- Figur 2: zu berücksichtigende Bildinformation bei Verwendung einer Makroblock-Prädiktion;
- Figur 3: eine Darstellung unterschiedlicher Prädiktionsmodi bei Verwendung von einem H.264-Prädiktionsmodus mit 4 x 4 Bildpunkten;
- Figur 4: eine Anordnung von referenzbilddaten in einem Datencontainer unter Verwendung von H.264 SEI-Einheiten;
- Figur 5: ein Teil eines kodierten Datenstroms in Form eine NAL-Einheit;
- Figur 6: einen Aufbau eines Systems mit einer Kodiervorrichtung und einer Extraktionsvorrichtung.

Elemente mit gleicher Funktion und Wirkungsweise sind in den Figuren mit denselben Bezugszeichen versehen.

Die vorliegende Erfindung wird anhand eines zu kodierenden Videodaten vorgestellt. Im Allgemeinen kann die Erfindung auch für jede beliebige Art von Datenströmen verwendet werden, wie beispielsweise ein Musik- oder Sprachdatenstrom.

In einem ersten Schritt wird mit Hilfe eines Kodierstandards S, zum Beispiel einem Videokodierstandard H.264, ein Datenstrom DS, der mehrere unkodierte Bilder ausfweist, in einen kodierten Datenstrom kDS kodiert. Der Datenstrom DS umfasst zumindest ein Datenobjekt RoI in Form eines Bildbereichs, welches beispielsweise eine Person in einem Bild repräsentiert. Durch die Kodierung des Datenstroms in den kodierten Datenstrom sind alle Inhalte des Bildes, also auch das Datenobjekt RoI in dem kodierten Datenstrom in komprimierter Form enthalten. Das Datenobjekt RoI ist somit ebenfalls in dem kodierten Datenstrom kDS als kodiertes Datenobjekt kRoI enthalten.

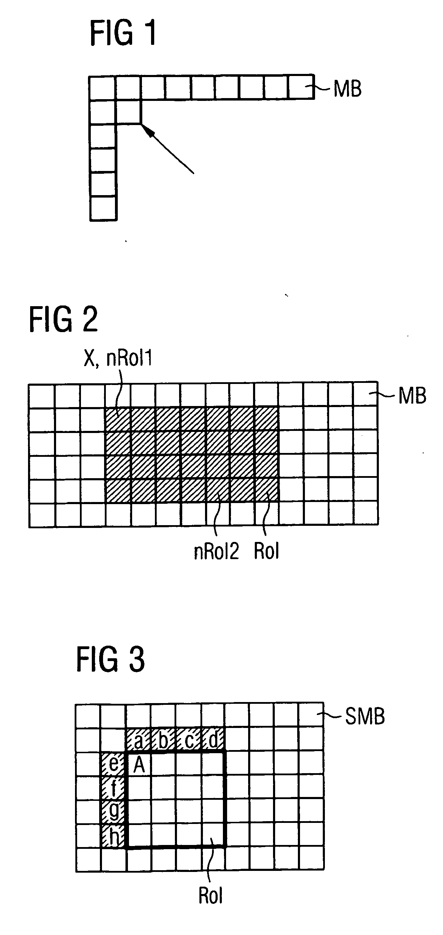

Der H.264-Standard nutzt zur Erreichung einer hohen Kompression eine Vielzahl von Prädiktionsmodi durchführt. Dies hat zur Folge, dass auch der Bildbereich des Datenobjekts RoI von anderen Bilddateninformationen ist. Dies wird anhand von Figur 1 näher erläutert. In Figur 1 sind mehrere Bilddatenblöcke MB, z.B. Makroblöcke, als Quadrate dargestellt. Der mit dem Pfeil zu kodierende Makroblock kann dabei bei einer Prädiktion Bilddateninformation von ihm links beziehungsweise von ihm oben gelegene Makroblöcke berücksichtigen. Diese Abhängigkeit bei der Prädiktion von benachbarten Makroblöcken tritt jedoch nur auf, falls der zu kodierende Makroblock nicht derjenige Makroblock ist, der sich in dem zu kodierenden Bild des Bilddatenstroms an einer Position oben links, bezeichnet mit einer Makroblockadresse 0 befindet.

In Figur 2 ist eine Vielzahl von mit Quadraten markierten Makroblöcken MB eines zu kodierenden Bildes zu sehen. Die schwarz gefüllten Makroblöcke repräsentieren das zu kodierende Datenobjekt RoI. Bei der Kodierung des Datenobjekts RoI sind in Figur neben den schwarz gefüllten Makroblöcken auch eine Pixelzeile und/oder -spalte X, die sich in den oben und links des Bildobjekts liegenden Makroblöcken befinden, zu berücksichtigen. In Figur 2 sind diese Zeile und Spalte X mit einem dicken schwarzen Strich wiedergegeben.

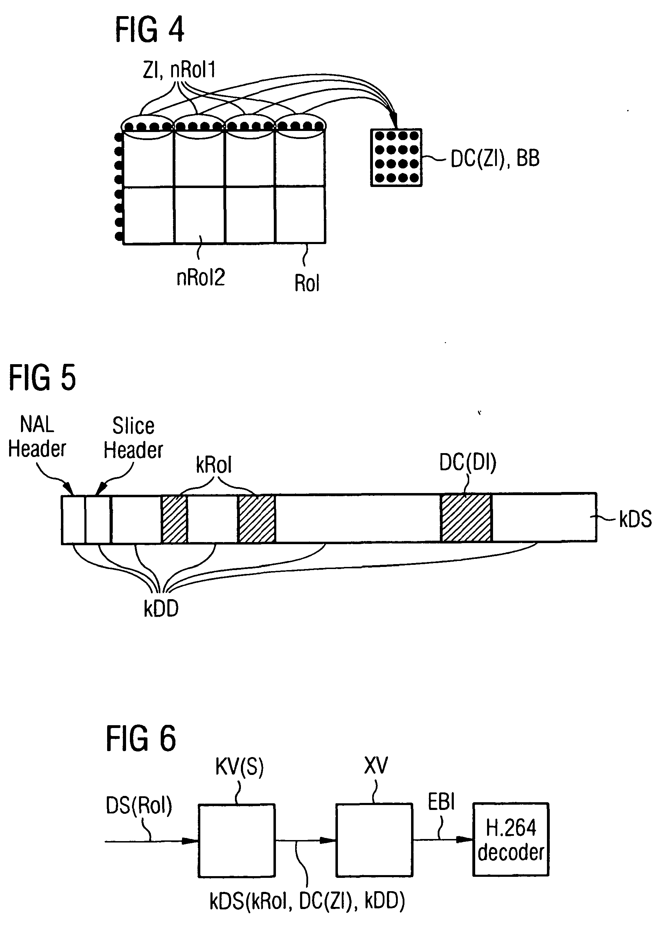

In dem Standard H.264 werden zwei unterschiedliche Intra-Prädiktionen eingesetzt und zwar eine 16 x 16 und eine 4 X 4 Intra-Prädiktion. Während bei der 16 x 16 Intra-Prädiktion ein ganzer Makroblock auf einmal prädiziert wird, wird bei dem 4 X 4 Prädiktionsmodus der 16 x 16 Pixel Makroblock in 16 4 x 4 Sub-Makroblöcke aufgeteilt. Jeder dieser Sub-Makroblöcke wird dann unabhängig voneinander auf Grundlage neun unterschiedlicher Prädiktionsmodi prädiziert. Diese neun unterschiedlichen Prädiktionsmodi unterscheiden sich beispielsweise in einer örtlichen Richtung der Prädiktion, wobei hierdurch eine unterschiedliche Anzahl von oben und links zu dem zu kodierenden Sub-Makroblock SMB benachbarte Makroblöcke berücksichtigt werden müssen. In Figur 3 ist mit einem Bezugszeichen A ein zu prädizierender Sub-Makroblock MB zu sehen. Die Buchstaben a bis h repräsentieren dabei die zu berücksichtigenden Sub-Makroblöcke außerhalb des mit grau angezeichneten zu kodierenden Datenobjekts im Rahmen eines jeweiligen Prädiktionsmodus. Im Allgemeinen gibt es hierbei der Prädiktion Bilddaten die innerhalb des Datenobjekts, gekennzeichnet mit zweite Referenzbilddaten nRoI2, und Bilddaten die außerhalb des Datenobjekts liegen, gekennzeichnet mit erste Referenzbilddaten nRoI1. Die ersten Referenzbilddaten nRoI ist z.B. die Pixelwerte gemäß Figur 4, die außerhalb des Datenobjekts RoI liegen. Da diese ersten Referenzbilddaten nicht durch das Datenobjekt bzw. das kodierte Datenobjekt selbst sondern durch die weiteren kodierten Daten repräsentiert werden, sind diese ersten Referenzbilddaten durch die Zusatzinformation wiederzugeben, um eine Dekodierung des kodierten Datenobjekts zu ermöglichen.

Die grundlegende Idee der Erfindung besteht dabei, dass in einer Zusatzinformation ZI diejenige Information des kodierten Datenstroms kDS bereitgestellt wird, die zusätzlich zu dem kodierten Datenobjekt kRoI benötigt wird, um dieses zu dekodieren. Wird der der kodierte Datenstrom kDS betrachtet, so kann dieser in zwei Teile aufgeteilt werden,
(a) das kodierte Datenobjekt kRoI und
(b) in weitere kodierte Daten kDD.

Das bedeutet, dass die Zusatzinformation ZI Information bzw. Informationen aus den weiteren kodierten Daten kDD aufweist. So ist bspw. bei dem Erstellen der Zusatzinformation ZI für das Beispiel aus Figur 3 zu berücksichtigen, dass Bildinhalte der für die Prädiktion verwendeten Nachbarbildblöcke beziehungsweise Sub-Makroblöcke a, ..., h bei einer Dekodierung zur Verfügung stehen müssen, um Fehler bei der Dekodierung zu vermeiden. Die Verwendung der Zusatzinformation zeigt den Vorteil, dass zum Dekodieren des kodierten Datenobjekts kRoI nur das kodierte Datenobjekt selbst und die Zusatzinformation ZI benötigt werden, wodurch ein langwieriges Dekodieren weiterer Teile des kodierten Datenstroms vermieden wird.

Damit die Zusatzinformation einem Empfänger des kodierten Datenstroms zur Verfügung steht wird diese Zusatzinformation dem kodierten Datenstrom hinzugefügt, bspw. mit Hilfe eines Datencontainers, der die Zusatzinformation umfasst. Dabei ist der Datencontainer ein Teil des kodierten Datenstroms. Dieser Datencontainer ist insbesondere ein optional zu dekodierendes Syntaxelement des Kodierstandards, wobei dieses Syntaxelement eine gemäß dem Kodierstandard konforme Syntax aufweist. Dies zeigt den Vorteil, dass ein Empfänger des kodierten Datenstroms, der die Zusatzinformation nicht auswerten kann, das Syntaxelement Datencontainer ignoriert, bspw. durch Überspringen im kodierten Datenstrom. Ein anderer Empfänger, z.B. eine Extraktionsvorrichtung hingegen liest die Zusatzinformation aus dem Datencontainer aus und kann diese verarbeiten.

Im vorliegenden Ausführungsbeispiel ist dieser Datencontainer DC als SEI-Datenfeld (SEI - Supplementary Enhancement Information) aufgebaut. Das SEI-Datenfeld in dem Standard H.264 hat die Eigenschaft, dass es zusätzliche Daten umfasst, die ein Dekoder bei der Dekodierung nicht berücksichtigen muss. Damit ein H.264-Dekoder jedoch erkennt, dass es sich bei dem Datencontainer um ein optionales Datenfeld handelt, muss dieses Datenfeld als optional zu kodierendes Syntaxelement, also beispielsweise als SEI-Datenfeld, kodiert werden.

Eine optionale Erweiterung des Verfahrens ist in Figur 4 zusehen. Das zu kodierende Datenobjekt ist mit acht Quadraten dargestellt, z.B. 8 Sub-Makroblöcke. Die kleinen runden Kreise repräsentieren Pixelwerte, d.h. die ersten Referenzbilddaten nRoI, benachbarter Sub-Makroblöcke, die zur Prädiktion und somit zur Kodierung des Datenobjekts herangezogen werden können. Die jeweils zu vier Pixelwerten durch ovale Kreise zusammengefassten Pixelgruppen zeigen diejenigen Pixelwerte, die schlussendlich bei der Prädiktion beziehungsweise Kodierung des Datenobjekts RoI in das kodierte Datenobjekt kRoI verwendet werden. Diese verwendeten Pixelwerte repräsentieren die Zusatzinformation und werden in dem Datencontainer DSC organisiert abgelegt.

Hierbei können die ersten Referenzbilddaten nRoI zu einem Bildblock BB gemäß dem Kodierstandard zusammengefasst werden und der Bildblock, bspw. durch Transformation und Quantisierung, in den kodierten Bildblock kodiert werden, wobei der kodierte Bildblock die Zusatzinformation, die in den Datencontainer geschrieben wird, repräsentiert. Hierdurch wird eine Darstellungsform der Zusatzdaten bzw. des Datencontainers erreicht, die ein geringes Speichervolumen benötigt.

Zudem kann in dem Bilddatencontainer DC neben den eigentlichen ersten Referenzbilddaten nRoI1 weitere Informationen vorhanden sein, die zur Dekodierung der ersten Referenzbilddaten zusammen mit dem kodierten Datenobjekt benötigt werden, wie beispielsweise welcher Quantisierungsparameter bei der Kodierung der ersten Referenzbilddaten in den kodierten Bildblock verwendet worden ist. Eine weitere Reduktion des benötigten Speichers der Zusatzinformation ZI bzw. des Datencontainers DC kann dadurch erzielt werden, dass nur diejenigen Pixelwerte der für die Prädiktion des Bilddatenobjekts benötigten Makroblöcke / Sub-Makroblöcke in die Zusatzinformation ZI übernommen werden, die ungleich Null sind. Hierbei ist der Zusatzinformation noch eine zusätzliche Information anzufügen, an welcher Position die aus den zur Prädiktion benötigten Sub-Makroblöcken entnommenen Pixelwerte in den jeweiligen Sub-Makroblöcken auftreten.

Figur 5 zeigt einen Abschnitt des kodierten Datenstrom kDS umfassend das kodierte Datenobjekt kRoI, die weiteren kodierten Daten kDD und den die Zusatzinformation ZI umfassenden Datencontainer DC(ZI). In Figur 5 ist der Abschnitt des kodierten Datenstrom kDS in einer NAL-Einheit (NAL - Network Adaptation Layer), einer Transporteinheit zum Übertragen von Bilddaten von einem Sender zu einem Empfänger beziehungsweise zum Speichern von kodierten Bilddaten eingepackt. Die NAL-Einheiten sind aus dem Kodierstandard H.264 bekannt. Die für das Datenobjekt relevanten Informationen sind in diesem kodierten Bilddatenstrom mit schwarzen Feldern markiert.

In Figur 6 ist ein System mit einer Kodiervorrichtung KV zum Erstellen des kodierten Datenstroms kDS gemäß der vorliegenden Erfindung, einer Extraktionsvorrichtung zum Verarbeiten des mit der Kodiervorrichtung erstellten kodierten Datenstroms und ein H.264-Dekoder zu sehen, wobei der H.264-Dekoder in der Lage ist, das kodierte Datenobjektt zu dekodieren und beispielsweise einem Benutzer auf einem Monitor wiederzugeben. Der Dtenstrom DS wird der Kodiervorrichtung KV gemäß den erläuterten Schritten zum Kodieren in den kodierten Datenstrom kDS umfassend zumindest ein kodiertes Datenobjekt kRoI und den die Zusatzinformation ZI umfassenden Bilddatencontainer DC. Dieser kodierte Datenstrom kDS wird an eine Extraktionsvorrichtung XV übertragen. Die Extraktionsvorrichtung XV erhält bspw. eine Information MC, welches der kodierten Datenobjekte aus dem kodierten Datenstrom extrahiert werden soll. Zum Extrahieren des kodierten Datenobjekts durchläuft die Extraktionsvorrichtung XV folgende Schritte:
- Zunächst werden die zu dem kodierten Datenobjekt kRoI dazugehörigen Datenabschnitte des kodierten Datenstroms ausgelesen.
- In einem nächsten Schritt wird der Datencontainer DC, der zu dem zu extrahierenden kodierten Datenobjekt gehört, ebenfalls aus dem kodierten Datenstrom kDS ausgelesen.

Somit liegen der Extraktionsvorrichtung alle relevanten Informationen vor, die zur Dekodierung des gewünschten Datenobjekts benötigt werden. Hierzu ist jedoch von Vorteil, dass diese direkt aus dem kodierten Bilddatenstrom entnommen werden können, ohne dass eine aufwändige Dekodierung der kodierten Bilddaten erforderlich ist. In einem nachfolgenden Schritt können das kodierte Datenobjekt und der Datencontainer in einem neuen Bitstrom EBI zusammengefasst und an den H.264-Dekoder zum Dekodieren und Ausgeben übertragen werden.

Die Erfindung und ihre Weiterbildungen sind anhand von Bilddaten näher erläutert worden. Im Allgemeinen kann jede Art von Daten durch Anwendung dieser Verfahren und dieser Vorrichtungen kodiert und extrahiert werden. Dabei werden an Stelle von Bilddaten andersartige Daten verwendet.

Die Kodiervorrichtung KV und/oder die Extraktionsvorrichtung XV können in Software, Hardware oder in Kombination aus Software und Hardware implementiert und ausgeführt werden. Ferner können diese Vorrichtungen beispielsweise auf einem Videoserver in einem Videoverteilsystem eingesetzt werden.

## Patentansprüche

1. Verfahren zum Generieren eines kodierten Datenstroms (kDS) aus einem Datenstrom (DS), der ein Bild oder eine Videosequenz repräsentiert, wobei ein Teil des Datenstroms (DS) ein Datenobjekt (RoI) repräsentiert,
mit folgenden Schritten:
- Kodieren des Datenstroms (DS) in den kodierten Datenstrom (kDS) gemäß einem Kodierstandard (S), wobei der kodierte Datenstrom (kDS) in ein das Datenobjekt (RoI) kodiertes Datenobjekt (kRoI) und weitere kodierte Daten (kDD) einteilbar ist;
- Bereitstellen einer Zusatzinformation (ZI), wobei die Zusatzinformation (ZI) diejenige Information aufweist, die zusätzlich zu dem kodierten Datenobjekt (kRoI) benötigt wird, um das kodierte Datenobjekt (kRoI) unabhängig von den weiteren kodierten Daten (kDD) zu dekodieren;
- Hinzufügen der Zusatzinformation (ZI) zu dem kodierten Datenstrom (kDS);
**dadurch gekennzeichnet, dass**
bei der Kodierung des Datenobjekts (RoI) eine gemäß dem Kodierstandard (S) vorgegebene Prädiktion auf Basis erster und zweiter Referenzbilddaten (nRoI1, nRoI2) verwendet wird, wobei die ersten Referenzbilddaten (nRoI1) lediglich durch zumindest einen Teil der weiteren kodierten Daten (kDD) repräsentiert werden,
die Zusatzinformation (ZI) durch die ersten Referenzbilddaten (nRoI1) gebildet wird.

2. Verfahren nach Anspruch 1,
**dadurch gekennzeichnet, dass**
die Zusatzinformation (ZI) in Form eines Datencontainers (DC) dem kodierten Datenstrom (kDS) hinzugefügt wird, wobei der Datencontainer (DC) derart als optional zu dekodierendes Syntaxelement erzeugt wird, dass dieser eine gemäß dem Kodierstandard (S) konforme syntax aufweist.

3. Verfahren nach Anspruch 2,
**dadurch gekennzeichnet, dass**
als Kodierstandard der H.264 Standard eingesetzt wird,
das Syntaxelement des Datencontainers (DC) durch ein SEI-Datenblock des H.264 Standards ausgebildet wird.

4. Verfahren nach einem der vorhergehenden Ansprüche,
**dadurch gekennzeichnet, dass**
die ersten Referenzbilddaten (nRoI1) zu einem Bildblock (BB) zusammengefasst werden,
der Bildblock (BB) gemäß dem Kodierstandard (S) in einen kodierten Bildblock (kDD) kodiert wird,
die ersten Referenzbilddaten (nRoI1) in der Zusatzinformation (ZI) durch den kodierten Bildblock (kBB) repräsentiert werden.

5. Verfahren nach Anspruch 4,
**dadurch gekennzeichnet, dass**
der Bildblock (BB) gemäß einer Transformation und einer Quantisierung des Kodierstandard (S) in einen kodierten Bilddatenblock (kDD) kodiert wird.

6. Verfahren nach einem der vorhergehenden Ansprüche,
**dadurch gekennzeichnet, dass**
als Kodierstandard (S) der ITU H.264 Videokodierstandard eingesetzt wird,
als erste Referenzbilddaten (nRoI1) Bilddaten verwendet werden, die im Rahmen einer Intra Prädiktion des Datenobjekts (RoI) gemäß H.264 von den zu dem Datenobjekt (RoI) benachbarten Makroblöcken benötigt wird.

7. Kodiervorrichtung (KV) zum Generieren eines kodierten Datenstroms (kDS),
**dadurch gekennzeichnet, dass**
die Kodiervorrichtung (KV) ein Mittel (M) aufweist, wobei das Mittel (M) zum Durchführen eines oder mehrerer Schritte des Verfahrens gemäß einem der Ansprüche 1 bis 6 ausgestaltet ist.

8. Extraktionsverfahren zum Extrahieren zumindest eines kodierten Datenobjekts (kRoI) aus einem kodierten Datenstrom (kDS),
mit folgenden Schritten:
- Auslesen des kodierten Datenobjekts (kRoI) aus dem kodierten Datenstrom (kDS);
- Auslesen eines den kodierten Datenstrom (kDS) umfassenden Datencontainers (DC) und einer Zusatzinformation (ZI) aus dem Datencontainer (DC);
- Erzeugen eines Datenobjekts (RoI) durch Dekodieren des kodierten Datenobjekts (kRoI) und der Zusatzinformation (ZI),
**dadurch gekennzeichnet, dass**
das Datenobjekt (RoI) aus dem kodierten Datenstrom (kDS), der gemäß einem der Ansprüche 1 bis 6 kodiert worden ist, extrahiert wird.

9. Extraktionsvorrichtung (X) zum Extrahieren zumindest eines kodierten Datenobjekts (kRoI) aus einem kodierten Datenstrom (kDS),
mit einem Extraktionsmittel (XM) zum Auslesen des kodierten Datenobjekts (kRoI) aus dem kodierten Datenstrom (kDS) eines den kodierten Datenstrom (kDS) umfassenden Datencontainers (DC) und einer Zusatzinformation (ZI) aus dem Datencontainer (DC),
mit einem Dekodiermittel (DM) zum Erzeugen eines Datenobjekts (RoI) durch Dekodieren des kodierten Datenobjekts (kRoI) und der Zusatzinformation (ZI),
**dadurch gekennzeichnet, dass**
die Extraktionsvorrichtung derart ausgestaltet ist, dass das Datenobjekt (RoI) aus dem kodierten Datenstrom (kDS), der gemäß einem der Ansprüche 1 bis 6 kodiert worden ist, extrahiert wird.

## Claims

1. Method for generating a coded data stream (kDS) from a data stream (DS) which represents an image or a video sequence, wherein a part of the data stream (DS) represents a data object (RoI),
comprising the following steps of:
- encoding the data stream (DS) into the coded data stream (kDS) in accordance with a coding standard (S), wherein the coded data stream (kDS) can be divided into a coded data object (kRoI) containing the data object (RoI) and further coded data (kDD);
- providing supplementary information (ZI), wherein the supplementary information (ZI) includes that information that is required in addition to the coded data object (kRoI) in order to decode the coded data object (kRoI) independently of the further coded data (kDD);
- adding the supplementary information (ZI) to the coded data stream (kDS);
**characterised in that**
during the encoding of the data object (RoI) a prediction specified in accordance with the coding standard (S) and based on first and second reference image data (nRoI1, nRoI2) is used, wherein the first reference image data (nRoI1) is represented only by at least a part of the further coded data (kDD),
the supplementary information (ZI) is formed by the first reference image data (nRoI1).

2. Method according to claim 1,
**characterised in that**
the supplementary information (ZI) is added in the form of a data container (DC) to the coded data stream (kDS), wherein the data container (DC) is generated as a syntax element that is optionally to be decoded in such a way that the syntax element has a syntax conforming to the coding standard (S).

3. Method according to claim 2,
**characterised in that**
the H.264 standard is used as the coding standard, with the syntax element of the data container (DC) being embodied by an SEI data block of the H.264 standard.

4. Method according to one of the preceding claims,
**characterised in that**
the first reference image data (nRoI1) is combined into an image block (BB),
the image block (BB) is encoded into a coded image block (kDD) in accordance with the coding standard (S),
the first reference image data (nRoI1) in the supplementary information (ZI) is represented by the coded image block (kBB).

5. Method according to claim 4,
**characterised in that**
the image block (BB) is encoded into a coded image data block (kDD) in accordance with a transformation and a quantisation of the coding standard (S).

6. Method according to one of the preceding claims,
**characterised in that**
the ITU H.264 video coding standard is used as the coding standard (S),
image data which is required by the neighbouring macroblocks of the data object (RoI) as part of an intra prediction of the data object (RoI) in accordance with H.264 is used as first reference image data (nRoI1).

7. Encoding device (KV) for generating a coded data stream (kDS),
**characterised in that**
the encoding device (KV) has a means (M), wherein the means (M) is embodied for performing one or more steps of the method according to one of claims 1 to 6.

8. Extraction method for extracting at least one coded data object (kRoI) from a coded data stream (kDS),
comprising the following steps of:
- reading out the coded data object (kRoI) from the coded data stream (kDS);
- reading out a data container (DC) comprising the coded data stream (kDS) and supplementary information (ZI) from the data container (DC);
- generating a data object (RoI) by decoding the coded data object (kRoI) and the supplementary information (ZI),
**characterised in that**
the data object (RoI) is extracted from the coded data stream (kDS) that has been encoded according to one of claims 1 to 6.

9. Extraction device (X) for extracting at least one coded data object (kRoI) from a coded data stream (kDS),
having an extraction means (XM) for reading out the coded data object (kRoI) from the coded data stream (kDS) of a data container (DC) comprising the coded data stream (kDS) and supplementary information (ZI) from the data container (DC),
having a decoding means (DM) for generating a data object (RoI) by decoding the coded data object (kRoI) and the supplementary information (ZI),
**characterised in that**
the extraction device is embodied in such a way that the data object (RoI) is extracted from the coded data stream (kDS) that has been encoded according to one of claims 1 to 6.

## Revendications

1. Procédé pour générer un flux de données codé (kDS) à partir d'un flux de données (DS) qui représente une image ou une séquence vidéo, une partie du flux de données (DS) représentant un objet de données (RoI), comportant les étapes suivantes :
- codage du flux de données (DS) en le flux de données codé (kDS) conformément à une norme de codage (S), le flux de données codé (kDS) pouvant être réparti en un objet de données codé (kRoI) représentant l'objet de données (RoI) et en d'autres données codées (kDD),
- mise à disposition d'une information additionnelle (ZI), l'information additionnelle (ZI) comportant l'information qui est requise en plus de l'objet de données codé (kRoI) pour décoder l'objet de données codé (kRoI) indépendamment des autres données codées (kDD),
- ajout de l'information additionnelle (ZI) au flux de données codé (kDS),
**caractérisé en ce que** :
- lors du codage de l'objet de données (RoI) est utilisée une prédiction sur la base de premières et de deuxièmes données d'image de référence (nRoI1, nRoI2) et prédéfinie conformément à la norme de codage (S), les premières données d'image de référence (nRoI1) étant représentées uniquement par au moins une partie des autres données codées (kDD),
- l'information additionnelle (ZI) est formée par les premières données d'image de référence (nRoI1).

2. Procédé selon la revendication 1, **caractérisé en ce que** l'information additionnelle (ZI) est ajoutée au flux de données codé (kDS) sous la forme d'un conteneur de données (DC), le conteneur de données (DC) étant généré de manière telle, en tant qu'élément de syntaxe à décoder optionnellement, qu'il présente une syntaxe conforme selon la norme de codage (S).

3. Procédé selon la revendication 2, **caractérisé en ce que** :
- la norme H.264 est utilisée en tant que norme de codage,
- l'élément de syntaxe du conteneur de données (DC) est formé par un bloc de données SEI de la norme H.264.

4. Procédé selon l'une des revendications précédentes, **caractérisé en ce que** :
- les premières données d'image de référence (nRoI1) sont regroupées en un bloc d'image (BB),
- le bloc d'image (BB) est codé conformément à la norme de codage (S) en le bloc d'image codé (kDD),
- les premières données d'image de référence (nRoI1) sont représentées dans l'information additionnelle (ZI) par le bloc d'image codé (kBB).

5. Procédé selon la revendication 4, **caractérisé en ce que** le bloc d'image (BB) est codé en un bloc de données d'image codé (kDD) conformément à une transformation et une quantification de la norme de codage (S).

6. Procédé selon l'une des revendications précédentes, **caractérisé en ce que** :
- la norme de codage vidéo H.264 de l'UIT est utilisée en tant que norme de codage (S),
- sont utilisées, en tant que premières données d'image de référence (nRoI1), des données d'image qui sont requises par les macroblocs voisins de l'objet de données (RoI) dans le cadre d'une ⁱntraprédiction de l'objet de données (RoI) conformément à H.264.

7. Dispositif de codage (KV) pour générer un flux de données codé (kDS), **caractérisé en ce que** le dispositif de codage (KV) comporte un moyen (M), le moyen (M) étant réalisé pour exécuter une ou plusieurs étapes du procédé selon l'une des revendications 1 à 6.

8. Procédé d'extraction pour extraire au moins un objet de données codé (kRoI) hors d'un flux de données codé (kDS), comportant les étapes suivantes :
- extraction de l'objet de données codé (kRoI) hors du flux de données codé (kDS),
- extraction d'un conteneur de données (DC) comprenant le flux de données codé (kDS) et d'une information additionnelle (ZI) hors du conteneur de donnés (DC),
- création d'un objet de données (RoI) par décodage de l'objet de données codé (kRoI) et de l'information additionnelle (ZI),
**caractérisé en ce que** l'objet de données (RoI) est extrait hors du flux de données codé (kDS) qui a été codé selon l'une des revendications 1 à 6.

9. Dispositif d'extraction (X) pour extraire au moins un objet de données codé (kRoI) hors d'un flux de données codé (kDS), comportant :
- un moyen d'extraction (XM) pour extraire l'objet de données codé (kRoI) hors du flux de données codé (kDS) d'un conteneur de données (DC) comprenant le flux de données codé (kDS), et une information additionnelle (ZI) hors du conteneur de données (DC),
- un moyen de décodage (DM) pour générer un objet de données (RoI) par décodage de l'objet de données codé (kRoI) et de l'information additionnelle (ZI),
**caractérisé en ce que** le dispositif d'extraction est réalisé de manière telle que l'objet de données (RoI) est extrait hors du flux de données codé (kDS) qui a été codé selon l'une des revendications 1 à 6.
